# EUROPEAN PATENT APPLICATION

(11) **EP 4 845 231 A1**
(43) Date of publication of application: **25.11.2026**
(21) Application number: 24919773.2
(22) Date of filing: 29.09.2024
(51) Int. Cl.: H04W 48/16

(54) **INFORMATION TRANSMISSION METHOD AND APPARATUS, AND STORAGE MEDIUM**

(30) Priority: 22.01.2024 CN 202410094632
(71) Applicant: ZTE Corporation, Shenzhen, Guangdong 518057 (CN)
(72) Inventor: GUO, Qiujin, Shenzhen, Guangdong 518057 (CN); DAI, Bo, Shenzhen, Guangdong 518057 (CN); CHEN, Mengzhu, Shenzhen, Guangdong 518057 (CN); BIAN, Luanjian, Shenzhen, Guangdong 518057 (CN); HU, Youjun, Shenzhen, Guangdong 518057 (CN); YANG, Weiwei, Shenzhen, Guangdong 518057 (CN)
(74) Representative: Vossius & Partner Patentanwälte Rechtsanwälte mbB
(86) International application number: PCT/CN2024/122339
(87) International publication number: WO 2025/156693

(57) **Abstract**

Embodiments of the present disclosure provide an information transmission method, an apparatus, and a storage medium. The information transmission method comprises: sending first information to a second node, the first information comprising cell information.

## Description

The present disclosure claims priority to Chinese patent application No.202410094632.2 filed on January 22, 2024, the disclosure of which is herein incorporated by reference in its entirety.

### FIELD

The present disclosure relates to the field of communication technologies, and in particular, to an information transmission method, an apparatus, and a storage medium.

### BACKGROUND

Currently, as the coverage area of passive Internet of Things devices increases, the passive Internet of Things devices often receive irrelevant commands sent from other cells, and therefore make erroneous responses or cause the problem about collisions in transmission resources, thereby reducing the communication efficiency of the passive Internet of Things devices.

### SUMMARY

In one aspect, there is provided an information transmission method, applied to a first node. The information transmission method comprises: sending first information to a second node, the first information comprising cell information.

In another aspect, there is provided an information transmission apparatus. The information transmission apparatus comprises: a sending unit; the sending unit is configured to send first information to a second node, the first information comprising cell information.

In yet another aspect, there is provided an information transmission method, applied to a second node. The information transmission method comprises: receiving first information sent by a first node, the first information comprising cell information.

In still another aspect, there is provided an information transmission apparatus. The information transmission apparatus comprises: a receiving unit; the receiving unit is configured to receive first information sent by a first node, the first information comprising cell information.

In yet another aspect, there is provided a communication apparatus. The communication apparatus comprises: a memory and a processor; the memory is coupled to the processor; the memory is configured to store a computer program; the processor, when executing the computer program, implements the information transmission method according to any one of the above aspects.

In yet another aspect, there is provided a computer-readable storage medium. The computer-readable storage medium stores computer program instructions, which, when executed by a processor, implement the information transmission method according to any one of the above aspects.

In yet another aspect, there is provided a computer program product. The computer program product comprises computer program instructions, which, when executed by a processor, implement the information transmission method according to any one of the above aspects.

### BRIEF DESCRIPTION OF THE DRAWINGS

In order to more clearly illustrate the technical solutions in the present disclosure, the drawings to be used in some embodiments of the present disclosure will be briefly introduced below. Obviously, the drawings in the following description are only drawings of some embodiments of the present disclosure, and for those of ordinary skill in the art, other drawings can also be obtained according to these drawings.
FIG. 1 illustrates a schematic diagram of a passive Internet of Things communication system according to some embodiments of the present disclosure.
FIG. 2 illustrates a schematic diagram of a passive Internet of Things device directly connected to a base station according to some embodiments of the present disclosure.
FIG. 3 illustrates a diagram of a system architecture according to some embodiments of the present disclosure.
FIG. 4 illustrates a schematic flowchart of a four-step random access method according to some embodiments of the present disclosure.
FIG. 5 illustrates a schematic flowchart of a two-step random access method according to some embodiments of the present disclosure.
FIG. 6 illustrates a schematic flowchart of a random access process for passive Internet of Things communications according to some embodiments of the present disclosure.
FIG. 7 illustrates a schematic flowchart of an information transmission method according to some embodiments of the present disclosure.
FIG. 8 illustrates a schematic diagram showing division of sub-cells according to some embodiments of the present disclosure.
FIG. 9 illustrates a schematic flowchart of another information transmission method according to some embodiments of the present disclosure.
FIG. 10 illustrates a schematic flowchart of yet another information transmission method according to some embodiments of the present disclosure.
FIG. 11 illustrates a schematic flowchart of still another information transmission method according to some embodiments of the present disclosure.
FIG. 12 illustrates a schematic diagram of a first node being an intermediate node according to some embodiments of the present disclosure.
FIG. 13 illustrates a schematic diagram of a first node being an assistant node according to some embodiments of the present disclosure.
FIG. 14 illustrates a schematic diagram of an information format in which first information is carried by a MAC PDU header or a MAC PDU sub-header according to some embodiments of the present disclosure.
FIG. 15 illustrates a schematic diagram of an information format in which first information is carried by a MAC subPDU/MAC SDU according to some embodiments of the present disclosure.
FIG. 16 illustrates a schematic diagram of first information being carried by both a MAC PDU header and a MAC subPDU/MAC SDU according to some embodiments of the present disclosure.
FIG. 17 illustrates a schematic structural diagram of an information format according to some embodiments of the present disclosure.
FIG. 18 illustrates a schematic structural diagram of another information format according to some embodiments of the present disclosure.
FIG. 19 illustrates a schematic structural diagram of yet another information format according to some embodiments of the present disclosure.
FIG. 20 illustrates a schematic structural diagram of still another information format according to some embodiments of the present disclosure.
FIG. 21 illustrates a schematic structural diagram of transmitting cell information via a control command according to some embodiments of the present disclosure.
FIG. 22 illustrates a schematic structural diagram of transmitting cell information via data to be transmitted according to some embodiments of the present disclosure.
FIG. 23 illustrates a schematic structural diagram of another transmission of cell information via data to be transmitted according to some embodiments of the present disclosure.
FIG. 24 illustrates a schematic structural diagram of transmitting cell information via a synchronization sequence according to some embodiments of the present disclosure.
FIG. 25 illustrates a schematic structural diagram of an information format for transmitting first cell information and second cell information according to some embodiments of the present disclosure.
FIG. 26 illustrates a schematic structural diagram of another information format for transmitting first cell information and second cell information according to some embodiments of the present disclosure.
FIG. 27 illustrates a schematic structural diagram of an information format for transmitting cell information via CRC bits of data to be transmitted according to some embodiments of the present disclosure.
FIG. 28 illustrates a schematic structural diagram of an information format for transmitting cell information via CRC bits of a control command according to some embodiments of the present disclosure.
FIG. 29 illustrates a schematic flowchart of yet another information transmission method according to some embodiments of the present disclosure.
FIG. 30 illustrates a schematic structural diagram of a communication apparatus according to some embodiments of the present disclosure.
FIG. 31 illustrates a schematic structural diagram of another communication apparatus according to some embodiments of the present disclosure.
FIG. 32 illustrates a schematic structural diagram of still another communication apparatus according to some embodiments of the present disclosure.

### DETAILED DESCRIPTION

In order to enable those skilled in the art to better understand the technical solutions of the embodiments of the present disclosure, the technical solutions in the present disclosure will be clearly and completely described below with reference to the accompanying drawings in the present disclosure. Apparently, the described embodiments are only part of the embodiments of the present disclosure, not all of them. Based on the embodiments in the present disclosure, all other embodiments obtained by those having ordinary skill in the art without making creative efforts shall fall within the protection scope of the present disclosure.

It needs to be appreciated that in the present disclosure, words such as "exemplarily" or "for example" are used to indicate an example, an illustration, or an explanation. Any embodiment or design described with the words "exemplarily" or "for example" in the present disclosure should not be construed as being more preferred or advantageous than other embodiments or designs. More precisely, the use of words such as "exemplarily" or "for example" is intended to present a related concept in a concrete manner.

Hereinafter, terms such as "first" and "second" are used for descriptive purposes only and should not be understood as indicating or implying relative importance or implicitly indicating the number of indicated technical features. Thus, features defined with the terms such as "first", "second" can explicitly or implicitly include one or more of those features.

In the description of the present disclosure, unless otherwise specified, "/" means "or", for example, A/B can represent A or B. "And/or" herein is merely an association relationship describing associated objects, indicating that three relationships can exist, e.g., A and/or B can mean: only A, only B, and both A and B. In addition, "at least one" means one or more, and "a plurality of" means two or more.

For ease of understanding the technical solutions provided by the embodiments of the present disclosure, a brief introduction to some technologies of the present disclosure is first presented as follows:

### I. Passive Internet of Things Communication System

A passive Internet of Things communication system can comprise an electronic device, a passive Internet of Things data transmitting device, and a passive Internet of Things data receiving device. The passive Internet of Things data receiving device can receive data sent by the passive Internet of Things data transmitting device and send the data to the electronic device.

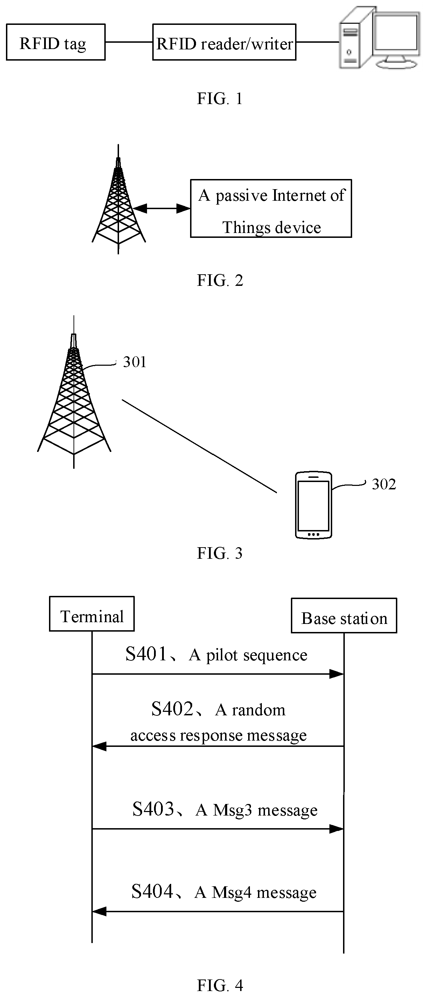

FIG. 1 illustrates a schematic diagram of a passive Internet of Things communication system. As an example, taking the passive Internet of Things communication system as a Radio Frequency Identification (RFID) system as an example, the passive Internet of Things data receiving device can be an RFID reader/writer, the passive Internet of Things data transmitting device can be an RFID tag, and the electronic device can be a computer. The RFID reader/writer can exchange data with the RFID tag via radio waves, and finally the RFID reader/writer transmits the data to the computer. The entire process does not require reception of a command from a cell, and thus does not require identification of an identity of the cell.

FIG. 1 mainly illustrates communication between passive Internet of Things devices. As the coverage area of passive Internet of Things devices continues to increase, passive Internet of Things devices can also be directly connected to a base station. FIG. 2 illustrates a schematic diagram of a passive Internet of Things device directly connected to a base station. In the case of direct connection between the passive Internet of Things device and the base station, the passive Internet of Things device can move from a current cell to other cells. If the passive Internet of Things device does not update the cell information of the cell in which it is located, there will occur a phenomenon that the source cell (i.e., the cell accessed before the passive Internet of Things device moves) fails to identify (also referred to as inventory) the device, and the target cell (i.e., the cell where the passive Internet of Things device is located after moving) also fails to identify the device. In addition, the passive Internet of Things device might receive inventory commands from different cells, which can cause collisions of transmission resources for commands from different cells, thereby reducing the working efficiency of the passive Internet of Things device.

### II. Random Access Process

After a terminal moves from another cell to the coverage area of a base station, it needs to access the base station. The terminal can access the base station in a random access manner. In 5^{th} Generation mobile communication technology (5G) communication, the random access process can be classified into a contention-based random access process and a contention-free based random access process. The following mainly describes the contention-based random access process.

In the contention-based random access process, in a case where a definite pilot sequence and/or reference signal is not pre-configured, a plurality of terminals randomly select a sequence from a candidate sequence pool to initiate random access. Afterwards, the terminal that wins the collision resolution establishes uplink synchronization with the base station. The contention-based random access process comprises two types, i.e., four-step random access and two-step random access.

FIG. 4 illustrates a schematic flowchart of a four-step random access method. As shown in FIG. 4, the four-step random access method comprises S401-S404.

S401: A terminal sends a pilot sequence to a base station.

S402: The base station feeds back a random access response message to the terminal.

S403: The terminal sends an Msg3 (Message 3) message to the base station.

S404: The base station sends an Msg4 (Message 4) message to the terminal.

The Msg3 message and Msg4 message are messages for collision resolution.

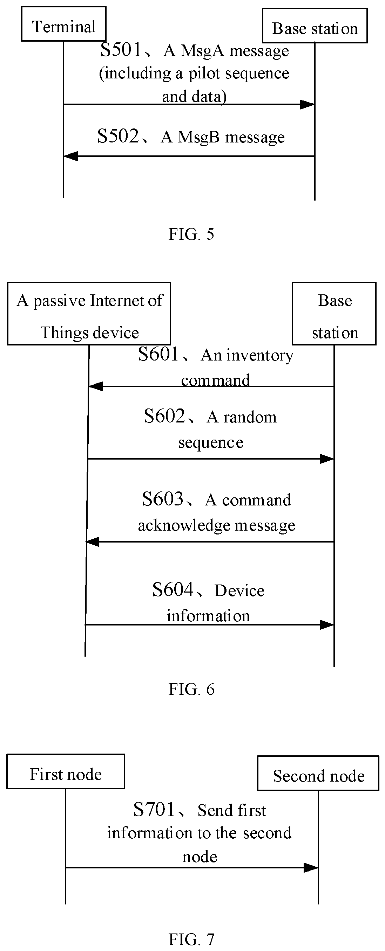

FIG. 5 illustrates a schematic flowchart of a two-step random access method. As shown in FIG. 5, the two-step random access method comprises S501 and S502.

S501: The terminal sends an MsgA message to the base station.

The MsgA message can comprise a pilot sequence and data.

S502: The base station sends an MsgB message to the terminal.

However, in a passive Internet of Things communication scenario, the random access process for passive Internet of Things communication differs from that for 5G communication.

FIG. 6 illustrates a schematic flowchart of a random access process for passive Internet of Things communication. As shown in FIG. 6, the random access process for passive Internet of Things communication comprises S601-S604.

S601: The base station sends an inventory command to the passive Internet of Things device.

The passive Internet of Things device can be a passive Internet of Things device. The inventory command can also be referred to as an inventorying command.

S602: The passive Internet of Things device sends a random sequence to the base station.

The random sequence can be a serial number or identity of the passive Internet of Things device.

S603: The base station receives the random sequence and returns a command acknowledgment message (ACK) to the passive Internet of Things device.

S604: The passive Internet of Things device sends device information of the passive Internet of Things device to the base station.

The device information can be a product code of the passive Internet of Things device or information related to inventory.

After the base station receives the device information sent by the passive Internet of Things device, the random access process is completed. The steps of the passive Internet of Things device sending the random sequence to the base station and the base station sending the ACK message are operations for collision resolution. When the base station sends the ACK message to the passive Internet of Things device, if the base station detects a collision, it repeatedly sends the inventory command until no collision occurs. If the device information received by the base station is invalid, the base station returns a Negative Acknowledgement (NACK) message to the passive Internet of Things device and repeatedly sends the inventory command to the passive Internet of Things device until no collision occurs.

After successful random access, the passive Internet of Things device can perform data transmission with the base station. During the data transmission, information is usually sent and received using a fixed frame structure signal. A frame structure comprises a frame header, data, and a frame trailer. The frame header and frame trailer are bit sequences or high/low level signals with fixed forms. The frame header can be used to determine the start of a signal, and the frame trailer can be used to determine the end of a signal, thereby determining the information transmission duration and the data-to-symbol quantity ratio of the frame structure signal. Since the current frame structure signal does not include cell information of the cell in which the second node is located, the passive Internet of Things device cannot identify the correct command based on the cell information. As such, the passive Internet of Things device often receives irrelevant commands from other cells, makes erroneous responses, or causes the problem about collisions in transmission resources, thereby reducing communication efficiency of such devices.

Currently, as the coverage area of passive Internet of Things communication devices increases, passive Internet of Things devices often receive irrelevant commands from other cells, and therefore make erroneous responses or cause the problem about collisions in transmission resources, thereby reducing the communication efficiency of such devices.

To solve the above technical problem, embodiments of the present disclosure provide an information transmission method by which a first node can send first information including cell information to a second node. In this way, the second node can distinguish, based on the cell information, information sent by the cell in which it is located, and canavoid receiving irrelevant commands sent by other cells, thereby improving the communication efficiency of the passive Internet of Things devices.

The information transmission method according to an embodiment of the present disclosure can be applied to the communication system shown in FIG. 3. As shown in FIG. 3, the communication system comprises: a first node 301 and a second node 302.

The first node 301 is connected with the second node 302 by communication. The first node 301 can be any of the following: a base station, an assistant node, or an intermediate node. The second node 302 can be any of the following: a passive Internet of Things device, a User Equipment (UE), or a terminal. FIG. 3 takes the first node 301 as a base station and the second node 302 as a terminal for illustration.

In the embodiment of the present disclosure, the first node 301 can send first information including cell information to the second node 302. The second node 302 can receive the first information including cell information sent by the first node 301. Since the cell information is the cell information of the cell in which the second node 302 is located, the second node 302 can determine, based on the cell information, that the received information is correct information. Thus, the second node 302 can avoid receiving information from other cells, thereby improving the communication efficiency.

The cell information can comprise a cell identity document (ID), etc.

It needs to be appreciated that FIG. 3 is merely an exemplary framework diagram; the number of devices included in FIG. 3 and the names of the respective devices are not limited, and in addition to the devices shown in FIG. 3, the communication system can further comprise other devices, such as a relay and a reader.

The application scenarios of the embodiments of the present disclosure are not limited. The system architecture and service scenarios described in the embodiments of the present disclosure are intended to more clearly illustrate the technical solutions of the embodiments of the present disclosure, and do not constitute limitations on the technical solutions provided by the embodiments of the present disclosure. Those having ordinary skill in the art will appreciate that, with the evolution of network architectures and the emergence of new service scenarios, the technical solutions provided by the embodiments of the present disclosure are equally applicable to similar technical problems.

The information transmission method provided by the embodiments of the present disclosure will be described in detail below with reference to the accompanying drawings.

The information transmission method provided by the embodiments of the present disclosure can be applied to the first node 301 in the communication system shown in FIG. 3. FIG. 7 illustrates a schematic flowchart of an information transmission method. As shown in FIG. 7, the information transmission method comprises the following S701.

S701: The first node sends first information to the second node.

The first information comprises cell information. The cell information can be one or more of a cell identity, a physical layer cell group number, a cell number of a physical layer cell, a sub-cell number (also referred to as a new cell number), a secure cell identity, or a Public Land Mobile Network cell identity, which is not limited in the embodiments of the present disclosure. Optionally, the first information can be a public message, which is a broadcast message or a multicast message sent by the first node.

In some embodiments, the cell information comprises first cell information and/or second cell information; wherein the first cell information comprises a cell identity, and the second cell information comprises a sub-cell identity.

Alternatively, the cell information comprises first cell information, and the first cell information is used to indicate whether the cell information comprises second cell information, the second cell information includes a cell identity and/or a sub-cell identity. As an example, the first cell information indicating whether the cell information comprises second cell information can be: the first cell information indicates whether the current frame or the next frame comprises the second cell information.

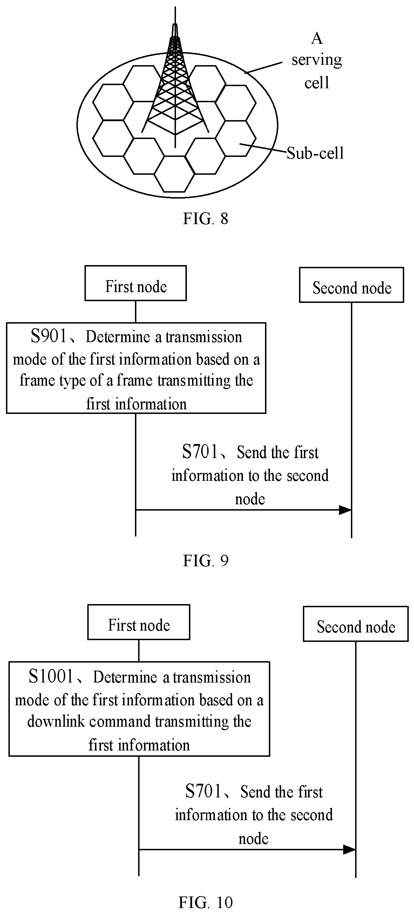

FIG. 8 illustrates a schematic diagram showing division of sub-cells. The sub-cells can be one or more sub-coverage areas obtained by further dividing a traditional cell (also referred to as a serving cell).

In some implementations, the first cell information can be the cell identity of a source cell (i.e., a cell previously accessed by the second node) of the second node, and the second cell information can be the cell identity of the cell in which the second node is currently located. Alternatively, the first cell information is at least one of: a current wireless communication cell identity, a physical cell identity configured by Radio Resource Control (RRC) signaling, a cell global identity, or a serving cell identity, and the second cell information is an identity configured by the first node. As stated above, the first node comprises devices such as a base station, an intermediate node, and an assistant node, and the intermediate node and the assistant node can be a UE. Therefore, the second cell information can also comprise a serial number or device ID of the first node itself.

In some embodiments, the first information is carried in downlink transmission information, and the downlink transmission information comprises all downlink transmission information sent by the first node to the second node, or the downlink transmission information comprises part of the downlink transmission information sent by the first node to the second node.

The above describes the cell information. Next, the order relationship between the cell information and other messages during transmission will be described. As described below, the order relationship between the cell information and other messages during transmission comprises the following Scenario 1 through Scenario 7.

Scenario 1: during the random access process, after the first node obtains the random sequence sent by the second node, the first node can send the first information to the second node.

Scenario 2: after the second node successfully performs random access (or after the first node obtains the device information of the second node), the first node can send the first information to the second node.

Scenario 3: upon sending an inventory command to the second node, the first node can send the first information to the second node.

Scenario 4: after the first node successfully performs inventory (or after the first node obtains the device information of the second node), it can send the first information to the second node.

Scenario 5: the first node can send the first information to the second node by broadcasting, and the order of the first information with other messages is not limited.

Scenario 6: after the second node sends a pilot to the first node, the first node can send the first information to the second node.

Scenario 7: after the second node sends a random sequence to the first node, the first node can send the first information to the second node.

The above describes the order relationship between the first information and other messages during transmission. The transmission mode of the first information will be described below.

In some embodiments, the transmission mode of the first information comprises an explicit indication mode and/or an implicit indication mode.

The explicit indication mode comprises at least one of the following: transmitting the first information on a Physical Downlink Shared Channel (PDSCH); transmitting the first information on a Physical Downlink Control Channel (PDCCH); transmitting the first information via Medium Access Control (MAC); transmitting the first information in RRC signaling; transmitting the first information on a Physical Broadcast Channel (PBCH); transmitting the first information in a dedicated indication field of a physical downlink frame; transmitting the first information on a dedicated physical resource; transmitting the first information on a dedicated physical channel.

The implicit indication mode comprises at least one of the following: carrying the first information using a preamble or a dedicated sequence; carrying the first information using a CRC.

In another embodiments, the first information can also be transmitted in various other modes, such as the following Mode 1 through Mode 4. Mode 1: the first information is transmitted through different types of frames; Mode 2: the first information is transmitted via different types of commands; Mode 3: the first information is transmitted in a plurality of modes in an associated manner; Mode 4: the first information is transmitted in a plurality of processes. Mode 1 through Mode 4 will be described below.

Mode 1: the first information is transmitted through different types of frames.

In some embodiments, the first information is carried in a frame of the downlink transmission information, and the frame comprises at least one of: a first type frame, a second type frame, or a third type frame; the first type frame is a frame for transmitting the first information in the explicit indication mode; the second type frame is a frame for transmitting in the implicit indication mode; the third type frame is a frame associated with a preset condition of the second node.

In some implementations, the first type frame can be a frame that supports transmission of the first information in the explicit indication mode, for example, the first type frame can comprise an indication field for transmitting the first information. The second type frame can be a frame that supports transmission of the first information in the implicit indication mode, for example, the second type frame does not include an indication field for transmitting the first information. The third type frame can be a frame associated with a preset process or preset state (i.e., preset condition), and when the second node satisfies the preset condition, the first information can be transmitted through the third type frame. Optionally, the preset state can be an idle state, an active state, an inactive state, a connected state, an inventory state, a non-inventory state, a to-be-inventoried state, or a post-inventory state of the second node.

Mode 2: the first information is transmitted through different types of commands.

In some embodiments, the first information is carried in a downlink command of the downlink transmission information, and the downlink command comprises at least one of: a first downlink command or a second downlink command; the first downlink command comprises at least one of: a paging command, an inventory command, an access command, an acknowledgment command, or an access response command; the second downlink command comprises at least one of: transport block size indication information, Cyclic Redundancy Check (CRC) information, a command format identifier, a synchronization signal index, an access mask index, a short message indication, or system information indication.

In some implementations, the first downlink command comprises at least one of: a cell access command, a power-on command, an inventory command, an inventorying command, a query command, an access command, a request random number command, a request UE ID command, a feedback acknowledgment command, a transport block size indication command, a level/pulse count indication command, a user equipment state indication command, a user equipment activation or deactivation command, an encoding mode indication command, a modulation mode indication command, a bandwidth size indication command, an indication command indicating the presence or absence of a start delimiter/end delimiter, a read command, a write command, or a select command. The second downlink command comprises at least one of the following: a power-on command, a repeat command, a response/responding command, a random-number request command, a UE ID request command, a feedback acknowledgement command, a transport block size indication command, a level/pulse count indication command, a user equipment state indication command, a user equipment activation or deactivation command, a coding mode indication command, a modulation mode indication command, a bandwidth size indication command, a signal transmission duration indication command, an indication command indicating the presence or absence of a start delimiter/end delimiter, a read command, a write command, or a select command. The user equipment state comprises at least one of an inventory state, a to-be-inventoried state, a non-inventory state, a post-inventory state, an on state, an off state, a secure state, an inactive state, a locked state, an activated state, or a deactivated state.

In some embodiments, the transmission mode of the first information is determined according to the type of command. The transmission mode comprises an explicit mode and/or an implicit mode.

In some implementations, if the second node receives the first downlink command, it indicates that the first information is carried and transmitted in the explicit mode. In some embodiments, if the second node receives the second downlink command, it indicates that the first information is carried and transmitted in the implicit mode.

In some implementations, the first node can carry the first information through a downlink command. In this way, upon receiving the downlink command, the second node can also receive the first information, and can determine, based on the cell information in the first information, that the downlink command is a correct command.

Mode 3: the first information is transmitted in a plurality of modes in an associated manner.

The first information is transmitted in at least one of the following transmission modes: physical layer control signaling, data to be transmitted, a Medium Access Control Control Element (MAC CE), or Radio Resource Control (RRC) signaling.

As an example, the first node can transmit the first information through a MAC CE in an associated manner. The first node can send a MAC CE to the second node, and since the MAC CE is transmitted in association with the first information, the first node can simultaneously send the first information when sending the MAC CE to the second node. It can be understood that the first node can also transmit the first information through the physical layer control signaling, data to be transmitted, or Radio Resource Control RRC signaling in an associated manner, which is not described in detail any more in the embodiments of the present disclosure.

Mode 4: the first information is transmitted in a plurality of processes.

The first information is transmitted in at least one of the following processes: a cell access process, a public message broadcast process, an inventory process, a command transmission process, or a data transmission process.

In some implementations, the first node can transmit the first information during the cell access process. For example, during the cell access process, after the first node obtains the random sequence sent by the second node, the first node can send the first information to the second node. The first node can also transmit the first information during the public message broadcast process, the inventory process, the command transmission process, or the data transmission process, which is not limited in the embodiments of the present disclosure.

In some embodiments, before S701, the first node can predetermine the transmission mode for transmitting the first information. Hereunder, the determination of the transmission mode of the first information by the first node will be described in conjunction with the description of the first information and the transmission mode of the first information.

FIG. 9 illustrates a schematic flowchart of another information transmission method. In conjunction with FIG. 7, as shown in FIG. 9, before the above S701, the method provided by the embodiment of the present disclosure further comprises:

S901: The first node determines the transmission mode of the first information based on the frame type of the frame transmitting the first information.

In some embodiments, the transmission mode of the first information can be determined based on the frame type of the frame transmitting the first information; in a case where the frame type is the first type frame, the transmission mode of the first information is the explicit indication mode; in a case where the frame type is the second type frame, the transmission mode of the first information is the implicit indication mode; in a case where the frame type is the third type frame, the transmission mode of the first information is the explicit indication mode and/or the implicit indication mode.

In some implementations, before sending the first information, the first node can first determine the frame for transmitting the first information. Then, the first node can determine the frame type of that frame, thereby determining the transmission mode of the first information based on the frame type of the frame that will transmit the first information.

FIG. 10 illustrates a schematic flowchart of yet another information transmission method. In conjunction with FIG. 7, as shown in FIG. 10, before the above S701, the method provided by the embodiment of the present disclosure further comprises:

S1001: The first node determines the transmission mode of the first information based on the downlink command transmitting the first information.

In some embodiments, the transmission mode of the first information is determined based on the downlink command transmitting the first information.

In a case where the downlink command is the first downlink command, the transmission mode of the first information is the explicit indication mode; in a case where the downlink command is the second downlink command, the transmission mode of the first information is the implicit indication mode.

In some implementations, in addition to determining the transmission mode of the first information based on the frame type, the first node can also transmit the first information through a downlink command. Thus, the first node can determine the transmission mode of the first information based on the type of downlink command that will transmit the first information.

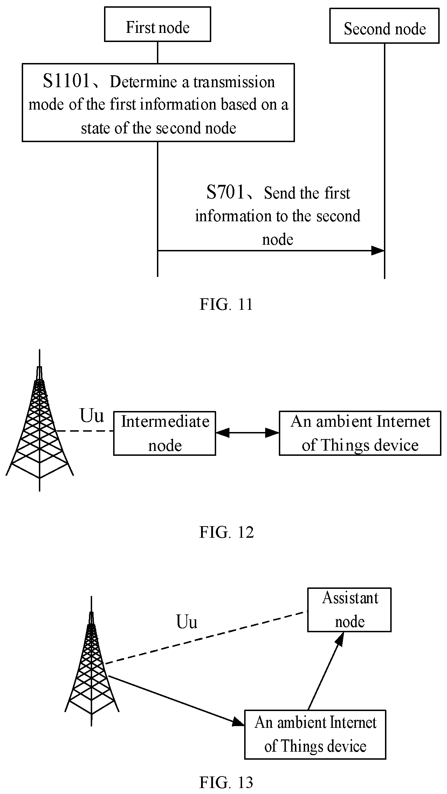

FIG. 11 illustrates a schematic flowchart (4^{th} flowchart) of still another information transmission method. In conjunction with FIG. 7, as shown in FIG. 11, before the above S701, the method provided by the embodiment of the present disclosure further comprises:

S1101: The first node determines the transmission mode of the first information based on a state of the second node.

The state of the second node can be a connection state between the second node and the base station.

In some embodiments, the transmission mode of the first information is determined based on the state of the second node, and the state of the second node comprises any one of the following states: an idle state, a connected state, an inactive state, an inventory state, a non-inventory state, a to-be-inventoried state, or a post-inventory state.

In a case where the state of the second node is the idle state or the inactive state or the inventory state or the to-be-inventoried state, the transmission mode of the first information is any one of the following modes: the explicit indication mode, a transmission mode based on the first type frame, a transmission mode based on the third type frame, or a transmission mode based on the first downlink command; in a case where the state of the second node is the connected state or the non-inventory state or the post-inventory state, the transmission mode of the first information is any one of the following: the implicit indication mode, a transmission mode based on the second type frame, a transmission mode based on the third type frame, or a transmission mode based on the second downlink command.

In some implementations, in a case where the first node determines that the state of the second node is the idle state or the inactive state or the inventory state or the to-be-inventoried state, the first node can determine that the transmission mode of the first information is the explicit indication mode. Since the first type frame (or the third type frame or the first downlink command) can all transmit the first information in the explicit indication mode, the first node can also bundle the transmission with the first type frame (or the third type frame or the first downlink command).

Correspondingly, in a case where the first node determines that the state of the second node is the connected state or the non-inventory state or the post-inventory state, the first node can determine that the transmission mode of the first information is the implicit indication mode. Since the second type frame (or the third type frame or the first downlink command) can all transmit the first information in the implicit indication mode, the first node can also bundle the transmission with the second type frame (or the third type frame or the first downlink command).

The above describes the determination of the transmission mode of the first information by the first node. Next, the transmission modes of the first information will be described in multiple cases in conjunction with the depictions of the first information and the depictions of the order of the first information and other information. Case 1 through Case 6 will be described respectively hereunder. Case 1: the first node transmits the first information via MAC and/or RRC signaling; Case 2: the first node transmits the first information via a PDCCH; Case 3: the first node transmits the first information on a dedicated physical resource; Case 4: the first node transmits the first information on a preamble resource; Case 5: the first node transmits the first information via a CRC resource; Case 6: the first node transmits the first information via a first resource and a second resource.

The first resource comprises at least one of: RRC signaling, transmission triggered by a MAC entity, a MAC CE, downlink control information, a downlink data channel, or a dedicated physical resource, etc. The second resource comprises a pilot resource or a CRC resource.

Case 1: the first node transmits the first information via MAC and/or RRC signaling.

The MAC layer comprises a MAC entity and a MAC CE. The first information can be transmitted triggered by the MAC entity, or transmitted under an instruction from a MAC CE, or configured and transmitted via RRC signaling, which will be described below respectively.

### (1) The first node triggers the transmission via the MAC entity:

In some embodiments, the MAC entity can trigger (or initiate or start) a random access process (also referred to as a cell access process), and during the cell access process or after successful cell access, the first node can send the first information to the second node.

As an example, for a cell access process initiated by the MAC entity of the second node, after the second node sends a pilot sequence to the first node, the second node can detect, within a period of time, whether the first node sends access response information to the second node. The access response information can comprise the first information, and can also comprise information related to the pilot sequence sent by the second node (including a pilot index, a pilot sequence, or acknowledgment information in response to pilot detection, etc.).

As another example, for a cell access process initiated by the first node, after the second node receives an inventory command sent by the first node, the MAC entity of the second node sends a random sequence to the first node. After receiving a valid random sequence, the first node can send acknowledgment information in response to the random sequence (the acknowledgment information comprises the first information).

As yet another example, for a cell access process initiated by the first node, after the second node receives the acknowledgment information sent by the first node in response to the random sequence, the second node can send device information to the first node. After receiving valid device information, the first node completes the cell access process. Thereafter, the first node can send the first information to the second node.

### (2) The first node transmits the first information via a MAC CE and RRC signaling:

In some embodiments, the second node can receive the first information indicated by a MAC CE. The received MAC CE can comprise at least one of: a source cell identity, a plurality of cell identities, or a cell list. The second node looks up in the received MAC CE for cell information that is the same as the most recently received cell information, and uses it as the cell information of the current cell. The cell information can be configured by RRC signaling.

FIG. 12 illustrates a schematic diagram of a first node being an intermediate node. As an example, the first node is communicatively connected to the base station via a User Unit (Uu) interface, and the second node (which can be a passive Internet of Things device or an ambient IoT device) is connected to the first node by communication. The first node can send a MAC CE including cell information to the second node. In addition, the first node can send the MAC CE in an active bandwidth part of the cell.

FIG. 13 illustrates a schematic diagram of a first node being an assistant node. As an example, the first node is communicatively connected to the base station via a Uu interface, the base station is connected to the second node by communication, and the first node is connected to the second node by communication. The first node can send a MAC CE including cell information to the second node. In addition, the first node can send the MAC CE in an active bandwidth part of the cell.

### (3) The first node transmits first cell information and second cell information via the MAC CE and RRC signaling:

In some embodiments, since the cell information can comprise first cell information and second cell information, the first cell information and the second cell information can be transmitted via the MAC CE and RRC signaling. The first cell information can comprise cell information of the cell where the first node is located (one or more passive Internet of Things cells), and the second cell information can comprise cell information (cell number) of a sub-cell (also referred to as a new cell) that is predefined or configured for each passive Internet of Things cell. The cell information of the sub-cell can be used for the divided area where the second node is located, or for distinguishing product types, or for locating the device position.

Optionally, the cell information can be transmitted on a broadcast channel, or configured by RRC signaling, or indicated by an MIB information element.

### (4) The first node transmits the first information via a MAC Protocol Data Unit (PDU):

The MAC can further comprise a MAC PDU.

In some embodiments, the first information can be carried by a MAC PDU header or a MAC PDU sub-header. The first information in the MAC PDU header can be located before or after one or more MAC PDU sub-headers. Alternatively, the first information is associated with a scrambling sequence of the MAC PDU header or the MAC PDU. Alternatively, the first information in the MAC PDU sub-header is associated with a MAC subPDU/MAC Service Data Unit (SDU) corresponding to the MAC PDU sub-header. Alternatively, the first information in the MAC PDU sub-header is associated with other information in the MAC PDU sub-header. The MAC subPDU/MAC SDU comprises a MAC control element related to data transmission, for example, at least one of the following MAC control units: a Buffer Status Report (BSR), a Cell Radio Network Temporary Identifier (C-RNTI), Discontinuous Reception (DRX), a UE Competition Resolution Identifier (CRI), a Timing Advance Command (TAC), or Power Headroom (PH), etc.; or the MAC subPDU/MAC SDU comprises a MAC PDU related to data transmission, a MAC PDU related to transparent transmission, or a MAC PDU related to random access.

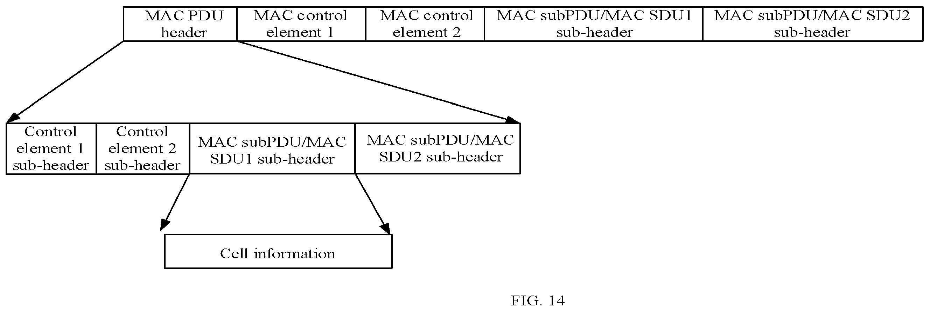

FIG. 14 illustrates a schematic diagram of an information format in which first information is carried by a MAC PDU header or a MAC PDU sub-header. This information format comprises a MAC PDU header, MAC control element 1, MAC control element 2, MAC subPDU/MAC SDU 1, and MAC subPDU/MAC SDU 2. The MAC PDU header comprises a sub-header for control element 1, a sub-header for control element 2, a sub-header for MAC subPDU/MAC SDU 1, and a sub-header for MAC subPDU/MAC SDU 2. The sub-header for MAC subPDU/MAC SDU 1 can comprise the first information. The sub-header for MAC subPDU/MAC SDU 1 can also comprise an R/R/E/LCID/sub-header.

In some embodiments, the first information is located in at least one MAC subPDU/MAC SDU. The MAC subPDU/MAC SDU can be a MAC PDU related to a random access process, and the first information is carried by a MAC subPDU in an RAR, or the first information is located before or after the MAC subPDU in the RAR. The MAC subPDU in the RAR comprises at least one of: a Backoff Indicator (BI), a random access pilot identifier or a Random Access Preamble Identifier (RAPID). The MAC subPDU/MAC SDU can be a MAC PDU related to data transmission, and the first information is carried by at least one MAC subPDU/MAC SDU or by at least one piece of MAC control information.

At least one MAC subPDU/MAC SDU can contain the first information, or at least one MAC subPDU/MAC SDU is scrambled by a sequence determined by the first information.

The at least one MAC control information comprises at least one of the following MAC control elements: a buffer status report BSR, a C-RNTI, a DRX, a UE Competition Resolution Identifier (CRI), a Timing Advance Command (TAC), or Power Headroom (PH), etc.

The MAC subPDU/MAC SDU is a MAC PDU related to transparent transmission, and the first information is carried by a specific MAC subPDU/SDU. The first information is located in the header or tail of the specific MAC subPDU/SDU information.

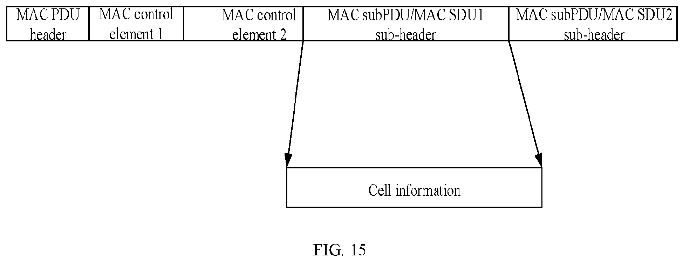

FIG. 15 illustrates a schematic diagram of an information format in which first information is carried by a MAC subPDU/MAC SDU. This information format comprises a MAC PDU header, MAC control element 1, MAC control element 2, MAC subPDU/MAC SDU 1, and MAC subPDU/MAC SDU 2. The MAC subPDU/MAC SDU 1 (or MAC subPDU/MAC SDU 2) can comprise the first information.

In some embodiments, the MAC subPDU/SDU/PDU can comprise the first information, and the MAC PDU sub-header corresponding to the MAC subPDU/SDU/PDU comprises at least one of: indication information indicating whether the first information is present in the corresponding MAC subPDU/SDU/PDU, length indication information of the first information, or type indication information of the first information etc.

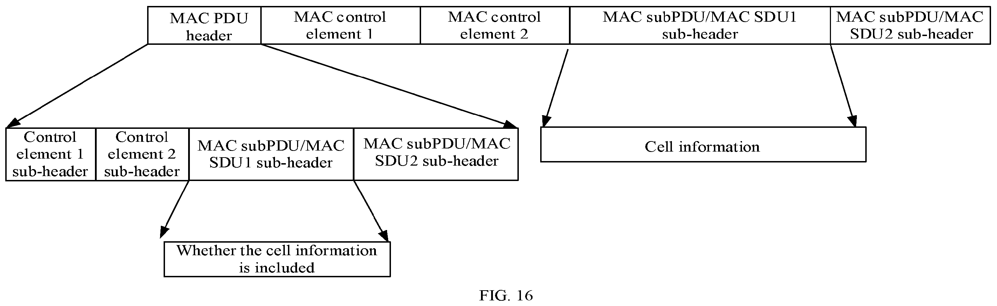

FIG. 16 illustrates a schematic diagram of first information being carried by a MAC PDU header and a MAC subPDU/MAC SDU. This information format comprises a MAC PDU header, MAC control element 1, MAC control element 2, MAC subPDU/MAC SDU 1, and MAC subPDU/MAC SDU 2. The MAC PDU header comprises a sub-header for control element 1, a sub-header for control element 2, a sub-header for MAC subPDU/MAC SDU 1, and a sub-header for MAC subPDU/MAC SDU 2. The sub-header for MAC subPDU/MAC SDU 1 can comprise an indication of whether the first information comprises cell information. In the case where the sub-header for MAC subPDU/MAC SDU 1 indicates that the first information comprises cell information, the MAC subPDU/MAC SDU 1 can comprise the cell information.

In some embodiments, the first information can be in at least one MAC control information, and the MAC control information is located before the MAC subPDU/SDU or the MAC PDU.

Case 2: The first node transmits the first information via a PDCCH.

The first information can be indicated by a dedicated field in the PDCCH or carried by CRC bits of control information transmitted on the PDCCH. The transmission (or carrying or indication) of the first information via the PDCCH will be described below respectively

### (5) The first node carries the first information via the PDCCH:

In some embodiments, the second node can receive the first information indicated by a dedicated field in the PDCCH during an initial cell access process; after successful cell access, the second node can receive the first information carried by CRC bits of control information transmitted on the PDCCH.

In some embodiments, when the CRC bits of the control information carried by the PDCCH are scrambled by a first Radio Network Temporary Identifier (RNTI), the PDCCH is used to carry the first information. The first RNTI comprises a public RNTI or an RNTI of the second node.

In some embodiments, the PDCCH can carry a new control information format, or the CRC bits of the control information carried by the PDCCH are scrambled by a new RNTI. The number of information bits carried by the new control information format is configured by higher-layer signaling or predefined. The number of information bits carried by the new control information format is not less than the length of the cell information.

In some embodiments, when the PDCCH carries first-type indication information, a dedicated field of the control information carried by the PDCCH or the CRC bits of the control information are used to carry the first information. The first-type indication information comprises at least one of: a downlink control information format identifier, a Synchronization Signal/PBCH block (SSB) index, a Physical Random Access Channel (PRACH) mask index, a short message indication, or a system information indication.

### (6) The first node carries first cell information and second cell information via a PDCCH:

In some embodiments, the first node can indicate the first cell information via a dedicated indication field in the PDCCH, and can carry the second cell information via CRC bits of control information transmitted on the PDCCH.

In some embodiments, the first node can carry the first cell information via the PDCCH and carry the second cell information via a PDSCH.

In some embodiments, in a case where the CRC bits of the PDCCH are scrambled by a first-type RNTI, the first information is indicated by a dedicated field of the PDCCH. In a case where the CRC bits of the PDCCH are scrambled by a second-type RNTI, the CRC bits of the PDCCH are used to carry the first information. The PDCCH scrambled by the first-type RNTI can be used to indicate an RNTI of a group of second nodes, or to indicate an RNTI of a second node in a cell or sub-cell, or to indicate one or more intermediate nodes (assistant nodes).

Case 3: The first node transmits the first information on a dedicated physical resource.

The dedicated physical resource can comprise at least one of: a dedicated common channel, a transmission resources for a preamble, a transmission resource for a control command, or a transmission resource for data to be transmitted. The transmission of the first information via the dedicated physical resource will be described below.

### (7) The first node transmits the first information via a dedicated physical resource:

In some embodiments, the first node can carry the first information in an information format on the dedicated physical resource. The information format is composed of at least one of the following information types: a preamble (also referred to as a preamble sequence), a control command, cell information, data to be transmitted, or a common channel.

The information format comprises the following a plurality of cases:
A first information format comprises a preamble and cell information.
A second information format comprises a preamble, a control command, and cell information; for example, the control command comprises a first control command.

The first control command comprises at least one of: a cell access command, a power-on command, an inventory command, a query command, a repeat command, an access command, a response/acknowledgment command, a request random number command, a request UE ID command, a feedback acknowledgment command, a transport block size indication command, a level/pulse count indication command, a user equipment state indication command, a user equipment activation or deactivation command, an encoding mode indication command, a modulation mode indication command, a bandwidth size indication command, a signal transmission duration indication command, an indication command indicating the presence or absence of a start delimiter/end delimiter, a read command, a write command, or a select command. The user equipment state comprises at least one of an inventory state, a to-be-inventoried state, a non-inventory state, a post-inventory state, an on state, an off state, a secure state, an inactive state, a locked state, an activated state, or a deactivated state.

A third information format comprises a preamble, a public message, and cell information; for example, the public message comprises indication information indicating whether the information format contains cell information.

A fourth information format comprises a preamble, data to be transmitted, and cell information; for example, the data to be transmitted comprises indication information indicating whether the information format contains cell information.

A fifth information format comprises a preamble, a control command, data to be transmitted, and cell information.

A sixth information format comprises a preamble, a control command, a public message, and cell information.

A seventh information format comprises a preamble, a control command, a public message, data to be transmitted, and cell information.

An eighth information format comprises a preamble, a public message, data to be transmitted, and cell information.

The above information formats can be an information format obtained by sequentially combining one or more of information types included by the above information formats.

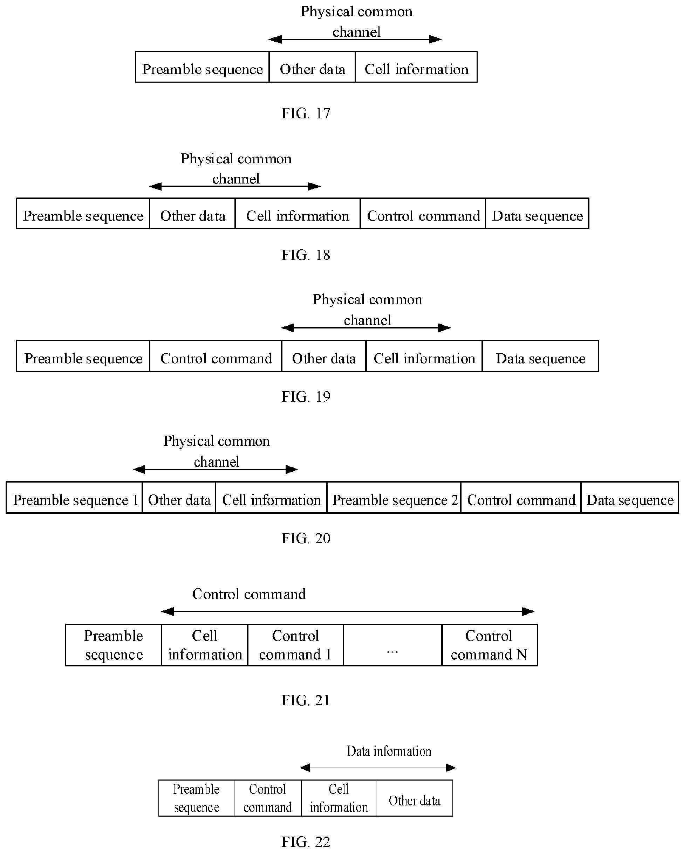

FIG. 17 illustrates a schematic structural diagram of an information format. This information format (e.g., the first information format) comprises a preamble (or preamble sequence), cell information (including a cell identity), and other data. The cell information and the other data are transmitted on a physical common channel.

FIG. 18 illustrates a schematic structural diagram of another information format. This information format (e.g., the fifth information format) comprises a preamble sequence, cell information, a control command, data to be transmitted (or a data sequence), and other data. The cell information and the other data can be transmitted on a physical common channel.

FIG. 19 illustrates a schematic structural diagram of yet another information format. This information format (e.g., the fifth information format) comprises a preamble sequence, a control command, other data, cell information, and a data sequence. The cell information and the other data are transmitted on a physical common channel.

FIG. 20 illustrates a schematic structural diagram of still another information format. This information format comprises preamble sequence 1, other data, cell information, preamble sequence 2, a control command, and a data sequence. Preamble sequence 1 is transmitted before preamble sequence 2. The cell information and the other data are transmitted on a physical common channel.

The preamble can comprise preamble sequence 1 and preamble sequence 2. Preamble sequence 1 can be transmitted before preamble sequence 2, or preamble sequence 1 and preamble sequence 2 can be transmitted in concatenation.

In some embodiments, the first information can be transmitted on a common channel.

In some embodiments, the first node can carry the first information through at least one information type. The information type comprises at least one of: a preamble, a control command, a synchronization sequence, data to be transmitted, or a public message. For example, the cell information is carried by a preamble sequence, or the preamble sequence is generated according to the cell information, or a preamble sequence index is generated according to the cell information, or the preamble sequence is generated using the cell information as an initial value. As another example, the cell information is carried by a control command, or the cell information is a field in the control command, or the cell information is used to scramble CRC bits of the control command, or a scrambling sequence of the control command is generated according to the cell information. As yet another example, the cell information is carried by data to be transmitted, or the cell information occupies a segment of dedicated resources in data transmission resources, or the cell information is used to scramble CRC bits of the data, or a scrambling sequence of the data is generated according to the cell information. As still another example, the cell information is carried by a public message, or the cell information occupies a segment of dedicated resources in public message transmission resources, or the cell information is used to scramble CRC bits of the public message, or a scrambling sequence of the public message is generated according to the cell information.

In some embodiments, the length of the preamble sequence (control command, data to be transmitted, or public message) used for carrying the cell information is not less than a first preset threshold (the first preset threshold is not less than 4 and not greater than 1000).

FIG. 21 illustrates a schematic structural diagram of transmitting cell information via a control command. This information format comprises a preamble sequence and a plurality of control commands (control command 1 . . . control command N). The cell information is also carried in the plurality of control commands and is located before control command 1.

FIG. 22 illustrates a schematic structural diagram of transmitting cell information via data to be transmitted. This information format comprises a preamble sequence, a control command, and data information (i.e., data to be transmitted). The data information can comprise cell information and other data.

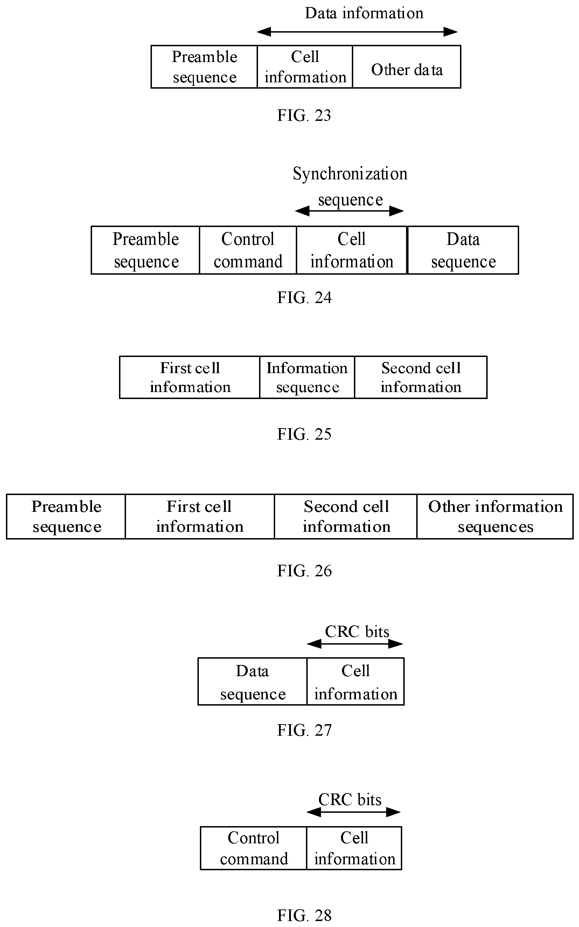

FIG. 23 illustrates a schematic structural diagram of another transmission of cell information via data to be transmitted. This information format comprises a preamble sequence and data information (i.e., data to be transmitted). The data information can comprise cell information and other data.

FIG. 24 illustrates a schematic structural diagram of transmitting cell information via a synchronization sequence. This information format comprises a preamble sequence, a control command, cell information, and a data sequence. The cell information is carried in the synchronization sequence.

### (8) The first node transmits first cell information and second cell information via a dedicated physical resource:

In some embodiments, the first node can transmit the first cell information and/or the second cell information in a plurality of information formats.

The plurality of information formats comprise:
A ninth information format comprises a preamble, first cell information, and second cell information.

A tenth information format comprises a preamble, a control command, first cell information, and second cell information; for example, when the control command comprises the first control command, a time-domain resource (or frequency-domain resource) before or after the control command is used to transmit the first cell information and/or the second cell information.

An eleventh information format comprises a preamble, a public message, first cell information and/or second cell information; for example, the public message comprises indication information indicating whether the information format contains the first cell information or the second cell information.

A twelfth information format comprises a preamble, a control command, data to be transmitted, first cell information and/or second cell information; for example, the data to be transmitted can comprise indication information indicating whether the information format comprises the first cell information and/or the second cell information.

A thirteenth information format comprises a preamble, a control command, data to be transmitted, first cell information and/or second cell information.

A fourteenth information format comprises a preamble, a control command, a public message, first cell information and/or second cell information.

A fifteenth information format comprises a preamble, a control command, a public message, data to be transmitted, first cell information and/or second cell information.

A sixteenth information format comprises a preamble, a control command, data to be transmitted, first cell information and/or second cell information.

The above information formats can be an information format obtained by sequentially combining one or more of information types included by the above information formats.

FIG. 25 illustrates a schematic structural diagram of an information format for transmitting first cell information and second cell information. This information format can comprise first cell information, second cell information, and data to be transmitted (or an information sequence).

FIG. 26 illustrates a schematic structural diagram of another information format for transmitting first cell information and second cell information. This information format comprises a preamble sequence, first cell information, second cell information, and other information sequences.

In some embodiments, the first information is transmitted on a common channel.

Case 4: The first node transmits the first information on a preamble resource.

The preamble resource can comprise a first preamble sequence and/or a second preamble sequence. The length of the first preamble sequence is not less than that of the second preamble sequence. The first preamble sequence and the second preamble sequence are different from existing Secondary Synchronization Signals (SSS) and/or Primary Synchronization Signals (PSS). The first preamble sequence and the second preamble sequence can be generated according to at least one of the following manners: Manchester encoding or Pulse Interval Encoding (PIE) or FM0 encoding or OOK modulation or ASK modulation or BPSK modulation or DFT-s-OFDM waveform. Next, the transmission of the first information on a preamble resource will be described.

### (9) The first node transmits the first information via a preamble resource:

In some embodiments, the cell information can be transmitted in a plurality of information formats. The information formats include the first preamble sequence and/or the second preamble sequence. In some embodiments, the first preamble sequence and/or the second preamble sequence are generated according to the cell information.

The plurality of information formats comprise:
A seventeenth information format comprises the first preamble sequence.

An eighteenth information format comprises the first preamble sequence and the second preamble sequence.

A nineteenth information format comprises the second preamble sequence.

The above information formats can be an information format obtained by sequentially combining one or more of information types included by the above information formats.

### (10) The first node transmits first cell information and/or second cell information via a preamble resource:

In some embodiments, in a case where the seventeenth information format comprises the first preamble sequence, the first preamble sequence is generated according to the first cell information and/or the second cell information, or the first preamble sequence is used to carry the first cell information and/or the second cell information.

In some embodiments, in a case where the eighteenth information format comprises the first preamble sequence and the second preamble sequence, the first preamble sequence is generated according to the first cell information, and the second preamble sequence is generated according to the second cell information. Alternatively, the first preamble sequence is used to carry the first cell information, and the second preamble sequence is used to carry the second cell information.

In some embodiments, in a case where the nineteenth information format comprises the second preamble sequence, the second preamble sequence is generated according to the first cell information and/or the second cell information. Alternatively, the second preamble sequence is used to carry the first cell information and/or the second cell information.

Case 5: The first node transmits the first information via a CRC resource.

The CRC resource comprises CRC bits of a control command (or data to be transmitted, or a public message). Control commands (or data to be transmitted or public messages) of different lengths have different numbers of CRC bits. The transmission of the first information via the CRC resource will be described below, respectively.

Optionally, the length of the CRC bits comprises at least one of: 4 bits, 8 bits, or 16 bits.

### (11) The first node carries the first information via CRC bits of a control command (or data to be transmitted or a public message):

In some embodiments, the data to be transmitted or CRC bits of the data to be transmitted are used to carry the cell information. A dedicated resource in data transmission resources is configured by higher-layer parameters or predefined to indicate to the second node that the CRC bits of the data to be transmitted are used for carrying the cell information.

The control command or CRC bits of the control command are used to carry the cell information. A dedicated resource in transmission resources of the control command is configured by higher-layer parameters or predefined to indicate to the second node that the CRC bits of the control command are used for carrying the cell information.

The public message or CRC bits of the public message are used to carry the cell information. A dedicated resource in transmission resources of the public message is configured by higher-layer parameters or predefined to indicate to the second node that the CRC bits of the public message are used for carrying the cell information.

In some embodiments, the CRC used for carrying the cell can have a first preset length, and the first preset length can be 8 or 16 bits.

In some embodiments, in a case where the CRC bit length (i.e., the CRC bits expected to carry the cell information) is smaller than the CRC bit length used for carrying the cell information (or the sequence length generated according to the cell information), the CRC bit length used for carrying the cell information (or the sequence length generated according to the cell information) is truncated. For example, when the CRC bit length used for carrying the cell information is an integer multiple of the CRC bit length expected to carry the cell information, the redundant length at the tail of the CRC bits used for carrying the cell information is truncated to achieve alignment with the CRC bit length.

FIG. 27 illustrates a schematic structural diagram of an information format for transmitting cell information via CRC bits of data to be transmitted. This information format comprises a data sequence (data to be transmitted) and cell information. The cell information is carried by the CRC bits of the data sequence.

FIG. 28 illustrates a schematic structural diagram of an information format for transmitting cell information via CRC bits of a control command. This information format comprises a control command and cell information. The cell information is carried by the CRC bits of the control command.

### (12) The first node carries first cell information or second cell information via CRC bits of a control command (or data to be transmitted or a public message):

In some embodiments, the data to be transmitted is used to carry the first cell information, and the CRC bits of the data to be transmitted are used to carry the second cell information. Alternatively, the data to be transmitted is used to carry the second cell information, and the CRC bits of the data to be transmitted are used to carry the second cell information. The first cell information is carried by a dedicated resource of the data to be transmitted, or the data sequence is scrambled by a sequence generated according to the first cell information.

The control command is used to carry the first cell information, and the CRC bits of the control command are used to carry the second cell information. Alternatively, the control command is used to carry the second cell information, and the CRC bits of the control command are used to carry the second cell information. The first cell information is carried by a dedicated indication field of the control command, or the control command is scrambled by a sequence generated according to the first cell information.

The public message is used to carry the first cell information, and the CRC bits of the public message are used to carry the second cell information. Alternatively, the public message is used to carry the second cell information, and the CRC bits of the public message are used to carry the second cell information. The first cell information is carried by a dedicated resource of the public message, or the public message is scrambled by a sequence generated according to the first cell information.

In some embodiments, the CRC bits of the control command carry the first cell information, and/or the CRC bits of the data to be transmitted or the public message carry the second cell information.

The CRC bits of the data to be transmitted or the public message carry the first cell information, and/or the CRC bits of the control command carry the second cell information.

The CRC bits of the data to be transmitted carry the first cell information, and/or the CRC bits of the control command or the public message carry the second cell information.

The CRC bits of the control command or the public message carry the first cell information, and/or the CRC bits of the data to be transmitted carry the second cell information.

The CRC bits of the public message carry the first cell information, and/or the CRC bits of the control command or the data to be transmitted carry the second cell information.

The CRC bits of the control command or the data to be transmitted carry the first cell information, and/or the CRC bits of the public message carry the second cell information.

In some embodiments, CRC bits of a first preset length are used to carry the first cell information, and/or CRC bits of a second preset length are used to carry the second cell information. The first preset length is not less than the second preset length.

Case 6: The first node transmits the first information via a first resource and a second resource.

It can be understood that transmission via the first resource is transmission in the explicit indication mode, and transmission via the second resource is transmission in the implicit indication mode. The first information can be transmitted jointly in both the explicit indication mode and the implicit indication mode.

In some embodiments, the first resource and the second resource that jointly carry the cell information are located in the same frame.

In some embodiments, for the second node that is in a cell access process, or in a Radio Resource Control Idle (RRC Idle) state, or in an RRC Inactive state (or inactive state), or in an inventory state, or in a to-be-inventoried state, the first node can employ the first resource to transmit the cell information. Alternatively, for the second node that has successfully accessed the cell, or is in an RRC Connected state, or is in an RRC Inactive state, or is in a non-inventory state, or is in an inventory completion state, the first node can transmit the cell information via the second resource.

It can be appreciated that the inventory completion state can also be referred to as the post-inventory state.

In some embodiments, the first node can transmit the cell information by combining the first resource and the second resource, and the combination manner comprises at least one of the following:

The first resource comprises RRC signaling, or downlink transmission triggered by a MAC entity, or MAC CE; the second resource comprise CRC bits corresponding to the first resource.

The first resource comprises RRC signaling, or downlink transmission triggered by a MAC entity, or MAC CE; the second resource comprises a first pilot sequence or a second pilot sequence or a preamble sequence or scrambling sequence associated with the first resource.

The first resource comprises a transmission resource of a physical downlink control channel; the second resource comprises CRC bits corresponding to the first resource, or CRC bits corresponding to a downlink data channel transmission resource related to the first resource.

The first resource comprises a transmission resource of a physical downlink control channel; the second resource comprises a pilot sequence associated with the first resource.

The first resource comprises a transmission resource of a physical downlink data channel; the second resource comprises CRC bits corresponding to the first resource or a pilot sequence associated with the first resource; or the first resource comprises a dedicated physical resource; the second resource comprises at least one of: CRC bits corresponding to the first resource, a pilot sequence associated with the first resource, a preamble sequence associated with the first resource, a control command, or data, etc.

In some embodiments, the transmission resource of a physical downlink control channel comprises a segment of dedicated resource in downlink control information transmission resources, or a dedicated indication field in the downlink control information.

The transmission resource of the physical downlink data channel comprises a segment of dedicated resource in data transmission resources, or a dedicated information bit in the data information.

The dedicated physical resource comprises a dedicated information field in a public message, or a segment of dedicated common channel transmission resource, or a dedicated control command, or a dedicated data information field, or a preamble sequence, or a preamble sequence of a control command frame, or a preamble sequence of a data frame, or a preamble sequence of a command acknowledgment frame, or a resource occupied by a cyclic prefix of an Orthogonal Frequency Division Multiplexing (OFDM) symbol, or a resource occupied by a cyclic suffix of the OFDM symbol.

In some embodiments, the CRC bits corresponding to the first resource comprise CRC bits corresponding to the physical downlink control channel, the physical downlink data channel, and/or the dedicated physical resource.

In some embodiments, the cell information is carried by the first downlink command and transmitted on the first resource, and/or the cell information is carried by the second downlink command and transmitted on the second resource.

In some embodiments, the transmission of cell information is associated with command information. If the first node transmits the first downlink command, the cell information is carried (explicitly) on the first resource. If the first node transmits the second downlink command, the cell information is carried (implicitly) on the second resource.

In some embodiments, the first downlink command is related to at least one of: cell access, random access, timing advance indication, power control, inventory and access, and command acknowledgment.

In some embodiments, the second downlink command is related to at least one of: control and data information sent after successful cell access/random access, synchronization information, power control, inventory and access, and command acknowledgment.

In some embodiments, the transmission of cell information is associated with a frame type. The first type frame is used to carry the cell information by in explicit indication mode, or the first type frame is transmitted on the first resource and carries the cell information; and/or the second type frame is used to carry the cell information in the implicit indication mode, or the second type frame is transmitted on the second resource and carries the cell information.

In some embodiments, the transmission of the cell information is associated with the data type of data to be transmitted. The cell information is bound to the transmission of first-type data and transmitted on the first resource; and/or the cell information is bound to the transmission of second-type data and transmitted on the second resource. The transmission of the first-type data transmits the cell information in explicit indication mode; and/or the transmission of the second-type data transmits the cell information in the implicit indication mode.

In some embodiments, the transmission of the cell information is associated with a length of the data to be transmitted or a Transport Block Size (TBS).

In some embodiments, when the length of the data to be transmitted is less than a second preset threshold, the data to be transmitted carrying the cell information is transmitted on the first resource, or the data to be transmitted transmits the cell information in the explicit indication mode. Alternatively, when the length of the data to be transmitted is not less than the second preset threshold, the data to be transmitted carrying the cell information is transmitted on the second resource, or the data to be transmitted transmits the cell information in the implicit indication mode.

In some embodiments, the first resource is used to transmit the first cell information, and/or the second resource is used to transmit the second cell information.

In some embodiments, the first cell information is transmitted in the explicit indication mode, and/or the second cell information is transmitted in the implicit indication mode.

In some embodiments, the second resource for carrying the cell information satisfy at least one of the following conditions: the number of bits carried by the second resource is not less than a third preset threshold, or the number of CRC bits corresponding to the second resource is not less than a fourth preset threshold. The fourth preset threshold can be equal to the first preset length.

In some embodiments, the second resources are used to transmit the first cell information and/or the second cell information.

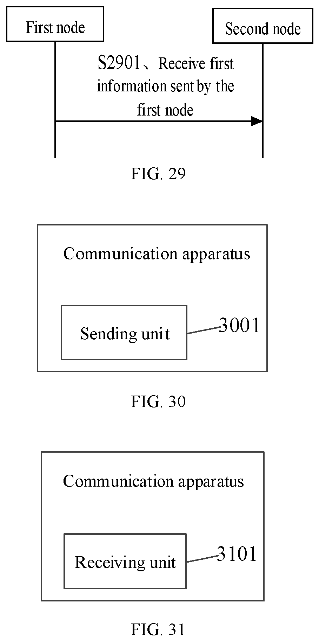

The information transmission method provided by the embodiment of the present disclosure can also be applied to the second node 302 in the communication system shown in FIG. 3. FIG. 29 illustrates a schematic flowchart (5^{th} flowchart) of an information transmission method. As shown in FIG. 29, the information transmission method comprises the following S2901.

S2901: The second node receives first information sent by the first node.

The first information comprises cell information.

In some implementations, after receiving the cell information in the first information, the second node can authenticate the cell information to determine whether the cell information is the cell information of the cell in which the second node is located. The authentication manner is as follows:

After receiving the first information, the second node can send user information or data carrying the cell information to the first node. In a case where the first node returns an acknowledgment message, the second node can confirm that the cell information is correct. In a case where the first node does not return an acknowledgment message, the second node repeatedly sends the user information or data carrying the cell information, or the second node continues to receive an inventory command sent by the first node, or the second node repeatedly sends a pilot to the first node until the second node receives new cell information and receives an acknowledgment message returned by the first node.

The manner in which the second node sends the user information or data carrying the cell information can comprise at least one of the following: transmitting the cell information as data or a command; transmitting the cell information as preamble information; transmitting a sequence generated according to the cell information; transmitting a sequence generated according to the cell information to scramble the CRC part of the data or the command information; or transmitting a sequence generated according to the cell information to scramble the data or the command information.

In some embodiments, the carrying (or transmission mode) of the cell information, or the determination of whether to carry (or transmit) the cell ID, is determined based on one or more of: a frame header type, a frame format, a command type, a control command transmission format, a data block size, an uplink transmission mode, and a terminal type. The frame header type comprises at least one of: a frame header of a control frame, a frame header of a data frame, frame headers of different control commands, a preamble sequence, a cyclic prefix, a start indicator, or an end indicator. The control command transmission format comprises at least one of: a MAC signaling type, a MAC PDU format, or RRC message type. The uplink transmission mode comprises at least one of: transmission in units of OFDM symbols, single-carrier transmission, transmission based on 5G NR timing alignment, or backscatter transmission. The terminal type comprises at least one of: a first terminal type, a second terminal type, or a third terminal type. The first terminal type is a terminal that performs downlink communication transmission directly with the base station; the second terminal type is a terminal that performs downlink communication transmission with the base station via an intermediate node/assistant node, or a terminal that performs downlink communication transmission with an intermediate node/assistant node; the third terminal type is a terminal that performs downlink communication transmission with the base station via a 4G (or 5G) terminal device, or a terminal that performs downlink communication transmission with a 4G (or 5G) terminal device.

In some implementations, when the data block size is less than a fifth preset threshold, the downlink transmission does not carry cell information or carries the cell information in an implicit manner. When the data block size is not less than the fifth preset threshold, the downlink transmission carries the cell information in an explicit or implicit manner.

In some embodiments, the public message comprises a UE ID. In some implementations, the cell information and the UE ID are simultaneously transmitted via a downlink. For example, the cell information and the UE ID are carried by specific fields or resources in a control command or data transmission. In some implementations, after receiving the cell information, the second node receives the UE ID. The transmission process for carrying the UE ID and the transmission process for carrying the cell information are different transmission processes. In some embodiments, after the transmission/reception process of the cell information ends, the transmission/reception process of the UE ID begins. For example, during the performance of the cell access process, the second node receives the cell information sent by the first node; then, during a subsequent inventory command or data transmission process, the second node receives the UE ID information sent by the first node.

It can be appreciated that after obtaining the cell information, unless the cell access process (or inventory process) is restarted, the second node does not receive (or does not respond to, does not expect to receive, or ignores) data or command information carrying cell information that is not of its own cell.

It needs to be appreciated that reference can be made to the depictions of the first node for the depictions of the first information received by the second node, the depictions of the order relationship between the first information and other messages, the depictions of the transmission mode of the first information, and the depictions of the determination of the transmission mode of the first information by the first node, which will not be described in detail any more in the embodiments of the present disclosure.

It can be appreciated that, It can be appreciated that, in order to implement the above functions, a communication apparatus comprises corresponding hardware structures and/or software modules for performing respective functions. Those skilled in the art should readily appreciate that, in combination with algorithm steps of the examples described in the embodiments of the present disclosure, the present disclosure can be implemented in hardware or a combination of hardware and computer software. Whether a function is performed by hardware or computer software driving hardware depends on the specific application and design constraints of the technical solutions. Those skilled in the art can use different methods for each specific application to implement the described functions, but such implementation should not be considered as going beyond the scope of the present disclosure.

In the embodiments of the present disclosure, the communication apparatus can be divided into functional modules according to the above method embodiments. For example, each functional module can be divided for each function, or two or more functions can be integrated into one functional module. The above integrated module can be implemented in the form of hardware or software. It needs to be appreciated that the division of modules in the embodiments of the present disclosure is illustrative and is only a logical function division; there can be other division manners upon actual implementations. The following illustration is presented by taking an example in which each functional module is divided for each function.

FIG. 30 illustrates a schematic structural diagram of a communication apparatus provided by an embodiment of the present disclosure. The communication apparatus can execute the information transmission method provided by the above method embodiments. As shown in FIG. 30, the communication apparatus comprises: a sending unit 3001.

The sending unit 3001 is configured to send first information to a second node, the first information comprising cell information.

In one implementation, the cell information comprises first cell information and/or second cell information; wherein the first cell information comprises a cell identity, and the second cell information comprises a sub-cell identity.

In one implementation, the cell information comprises first cell information, and the first cell information is used to indicate whether the cell information comprises second cell information, the second cell information includes a cell identity and/or a sub-cell identity.

In one implementation, the first information is carried in downlink transmission information, and the downlink transmission information comprises all downlink transmission information sent from the first node to the second node, or the downlink transmission information comprises part of the downlink transmission information sent from the first node to the second node.

In one implementation, a transmission mode of the first information comprises an explicit indication mode and/or an implicit indication mode.

In one implementation, the first information is carried in a frame of the downlink transmission information, and the frame comprises at least one of: a first type frame, a second type frame, or a third type frame; the first type frame is a frame for transmitting the first information in the explicit indication mode; the second type frame is a frame for transmitting in the implicit indication mode; the third type frame is a frame associated with a preset condition of the second node.

In one implementation, the transmission mode of the first information is determined based on a frame type of the frame transmitting the first information.

In one implementation, in a case where the frame type is the first type frame, the transmission mode of the first information is the explicit indication mode;

In a case where the frame type is the second type frame, the transmission mode of the first information is the implicit indication mode;

In a case where the frame type is the third type frame, the transmission mode of the first information is the explicit indication mode and/or the implicit indication mode.

In one implementation, the first information is carried in a downlink command of the downlink transmission information, and the downlink command comprises at least one of: a first downlink command or a second downlink command; the first downlink command comprises at least one of: a paging command, an inventory command, an access command, an acknowledgment command, or an access response command; the second downlink command comprises at least one of: transport block size indication information, Cyclic Redundancy Check (CRC) information, a command format identifier, a synchronization signal index, an access mask index, a short message indication, or system information indication.

In one implementation, the transmission mode of the first information is determined based on the downlink command transmitting the first information.

In one implementation, in a case where the downlink command is the first downlink command, the transmission mode of the first information is the explicit indication mode; in a case where the downlink command is the second downlink command, the transmission mode of the first information is the implicit indication mode.

In one implementation, the transmission mode of the first information is determined based on a state of the second node, and the state of the second node comprises any one of: an idle state, a connected state, an inactive state, an inventory state, a non-inventory state, a to-be-inventoried state, or a post-inventory state.

In one implementation, in a case where the state of the second node is the idle state or the inactive state or the inventory state or the to-be-inventoried state, the transmission mode of the first information is any one of: the explicit indication mode, the transmission mode based on the first type frame, the transmission mode based on the third type frame, or the transmission mode based on the first downlink command; in a case where the state of the second node is the connected state or the non-inventory state or the post-inventory state, the transmission mode of the first information is any one of: the implicit indication mode, the transmission mode based on the second type frame, the transmission mode based on the third type frame, or the transmission mode based on the second downlink command.

In one implementation, the explicit indication mode comprises at least one of: transmitting the first information on a Physical Downlink Shared Channel (PDSCH); transmitting the first information on a Physical Downlink Control Channel (PDCCH); transmitting the first information via a MAC CE;
transmitting the first information in RRC signaling; transmitting the first information on a Physical Broadcast Channel (PBCH); transmitting the first information in a dedicated indication field of a physical downlink frame;
transmitting the first information on a dedicated physical resource; or transmitting the first information on a dedicated physical channel.

In one implementation, the implicit indication mode comprises at least one of: carrying the first information using a preamble or a dedicated sequence; or carrying the first information using a CRC.

In one implementation, the first information is transmitted in at least one of the following transmission modes: physical layer control signaling, data to be transmitted, a Medium Access Control Control Element (MAC CE), or Radio Resource Control (RRC) signaling.

In one implementation, the first information is transmitted during at least one of the following processes: a cell access process, a public message broadcast process, an inventory process, a command transmission process, or a data transmission process.

FIG. 31 illustrates a schematic structural diagram of another communication apparatus provided by an embodiment of the present disclosure. The communication apparatus can execute the information transmission method provided by the above method embodiments. As shown in FIG. 31, the communication apparatus comprises: a receiving unit 3101.

The receiving unit 3101 is configured to receive first information sent by a first node, the first information comprising cell information.

In one implementation, the cell information comprises first cell information and/or second cell information; wherein the first cell information comprises a cell identity, and the second cell information comprises a sub-cell identity.

In one implementation, the cell information comprises first cell information, and the first cell information is used to indicate whether the cell information comprises second cell information, the second cell information includes a cell identity and/or a sub-cell identity.

In one implementation, the first information is carried in downlink transmission information, and the downlink transmission information comprises all downlink transmission information sent from the first node to the second node, or the downlink transmission information comprises part of the downlink transmission information sent from the first node to the second node.

In one implementation, a transmission mode of the first information comprises an explicit indication mode and/or an implicit indication mode.

In one implementation, the first information is carried in a frame of the downlink transmission information, and the frame comprises at least one of: a first type frame, a second type frame, or a third type frame; the first type frame is a frame for transmitting the first information in the explicit indication mode; the second type frame is a frame for transmitting in the implicit indication mode; the third type frame is a frame associated with a preset condition of the second node.

In one implementation, the transmission mode of the first information is determined based on a frame type of the frame transmitting the first information.

In one implementation, in a case where the frame type is the first type frame, the transmission mode of the first information is the explicit indication mode;

In a case where the frame type is the second type frame, the transmission mode of the first information is the implicit indication mode;

In a case where the frame type is the third type frame, the transmission mode of the first information is the explicit indication mode and/or the implicit indication mode.

In one implementation, the first information is carried in a downlink command of the downlink transmission information, and the downlink command comprises at least one of: a first downlink command or a second downlink command; the first downlink command comprises at least one of: a paging command, an inventory command, an access command, an acknowledgment command, or an access response command; the second downlink command comprises at least one of: transport block size indication information, Cyclic Redundancy Check (CRC) information, a command format identifier, a synchronization signal index, an access mask index, a short message indication, or system information indication.

In one implementation, the transmission mode of the first information is determined based on the downlink command transmitting the first information.

In one implementation, in a case where the downlink command is the first downlink command, the transmission mode of the first information is the explicit indication mode; in a case where the downlink command is the second downlink command, the transmission mode of the first information is the implicit indication mode.

In one implementation, the transmission mode of the first information is determined based on a state of the second node, and the state of the second node comprises any one of: an idle state, a connected state, an inactive state, an inventory state, a non-inventory state, a to-be-inventoried state, or a post-inventory state.

In one implementation, in a case where the state of the second node is the idle state or the inactive state or the inventory state or the to-be-inventoried state, the transmission mode of the first information is any one of: the explicit indication mode, the transmission mode based on the first type frame, the transmission mode based on the third type frame, or the transmission mode based on the first downlink command; in a case where the state of the second node is the connected state or the non-inventory state or the post-inventory state, the transmission mode of the first information is any one of: the implicit indication mode, the transmission mode based on the second type frame, the transmission mode based on the third type frame, or the transmission mode based on the second downlink command.

In one implementation, the explicit indication mode comprises at least one of: transmitting the first information on a Physical Downlink Shared Channel PDSCH; transmitting the first information on a Physical Downlink Control Channel PDCCH; transmitting the first information via a MAC CE;
transmitting the first information in RRC signaling; transmitting the first information on a Physical Broadcast Channel PBCH; transmitting the first information in a dedicated indication field of a physical downlink frame;
transmitting the first information on a dedicated physical resource; or transmitting the first information on a dedicated physical channel.

In one implementation, the implicit indication mode comprises at least one of: carrying the first information using a preamble or a dedicated sequence; or carrying the first information using a CRC.

In one implementation, the first information is transmitted using at least one of the following transmission modes: physical layer control signaling, data to be transmitted, a Medium Access Control Control Element (MAC CE), or Radio Resource Control (RRC) signaling.

In one implementation, the first information is transmitted during at least one of the following processes: a cell access process, a public message broadcast process, an inventory process, a command transmission process, or a data transmission process.

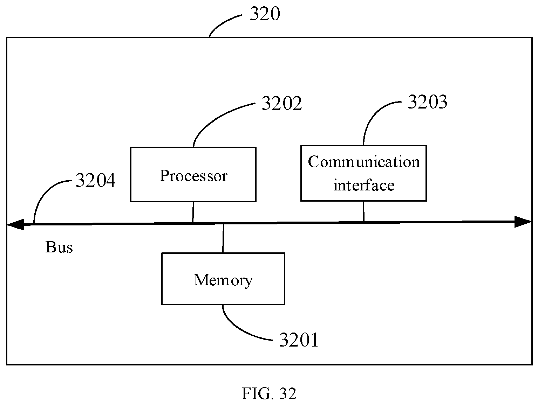

In a case where the functions of the above integrated modules are implemented in the form of hardware, an embodiment of the present disclosure provides another structure of a communication apparatus involved in the above embodiments. As shown in FIG. 32, the communication apparatus 320 comprises: a memory 3201, a processor 3202, a communication interface 3203, and a bus 3204.

The memory 3201 can be a Read-Only Memory (ROM) or other types of static storage devices that can store static information and instructions, a Random Access Memory (RAM) or other types of dynamic storage devices that can store information and instructions, or can be an Electrically Erasable Programmable Read-Only Memory (EEPROM), a magnetic disk storage medium or other magnetic storage devices, or any other medium that can be used to carry or store desired program code in the form of instructions or data structures and that can be accessed by a computer, but is not limited thereto.

The processor 3202 can implement or execute various exemplary logical blocks, modules, and circuits described in conjunction with the embodiments of the present disclosure. The processor 3202 can be a central processing unit, a general-purpose processor, a digital signal processor, an application-specific integrated circuit, a field-programmable gate array, or other programmable logic device, a transistor logic device, a hardware component, or any combination thereof. The processor 3202 can implement or execute various exemplary logical blocks, modules, and circuits described in conjunction with the embodiments of the present disclosure. The processor 3202 can also be a combination that implements computing functions, such as a combination including one or more microprocessors, a combination of a DSP (Digital Signal Processor) and a microprocessor, etc.

The communication interface 3203 is configured to connect to other devices through a communication network. The communication network can be an Ethernet, a radio access network, a Wireless Local Area Network (WLAN), etc.

In some embodiments, the memory 3201 can exist independently of the processor 3202. The memory 3201 can be connected to the processor 3202 through the bus 3204 for storing instructions or program code. When the processor 3202 calls and executes the instructions or program code stored in the memory 3201, the information transmission methods according to the embodiments of the present disclosure can be implemented.

In some embodiments, the memory 3201 can also be integrated with the processor 3202.

The bus 3204 can be an Extended Industry Standard Architecture (EISA) bus, etc. The bus 3204 can be classified into an address bus, a data bus, a control bus, etc. For ease of representation, only one thick line is used in FIG. 32 to represent the bus, but this does not mean that there is only one bus or one type of bus.

Some embodiments of the present disclosure provide a computer-readable storage medium (e.g., a non-transitory computer-readable storage medium) having computer program instructions stored therein, which, when run on a computer, cause the computer to perform the information transmission method according to any of the above embodiments.

Exemplarily, the above computer-readable storage medium can include, but is not limited to: a magnetic storage device (e.g., a hard disk, a floppy disk, or a magnetic tape, etc.), an optical disk (e.g., a Compact Disk (CD), a Digital Versatile Disk (DVD), etc.), a smart card, and a flash memory device (e.g., a Erasable Programmable Read-Only Memory (EPROM), a cards, a stick, or a key drive, etc.). The various computer-readable storage media described in the present disclosure can represent one or more devices and/or other machine-readable storage media for storing information. The term "machine-readable storage medium" can include, but is not limited to, a wireless channel and various other media capable of storing, containing, and/or carrying instructions and/or data.

An embodiment of the present disclosure provides a computer program product containing instructions, wherein when run on a computer, the computer program product causes the computer to perform the information transmission method according to any of the above embodiments.

What are described above are merely specific implementations of the present disclosure, but the scope of protection of the present disclosure is not limited thereto. Any change or replacement within the technical scope disclosed by the present disclosure should be covered within the scope of protection of the present disclosure. Therefore, the scope of protection of the present disclosure should be subject to the scope of protection of the claims.

## Claims

1. An information transmission method, applied to a first node, wherein the method comprises:
sending first information to a second node, the first information comprising cell information.

2. The method according to claim 1, wherein the cell information comprises first cell information and/or second cell information;
wherein the first cell information comprises a cell identity, and the second cell information comprises a sub-cell identity.

3. The method according to claim 1, wherein the cell information comprises first cell information, and the first cell information is used to indicate whether the cell information comprises second cell information, the second cell information comprising a cell identity and/or a sub-cell identity.

4. The method according to claim 1, wherein the first information is carried in downlink transmission information, and the downlink transmission information comprises all downlink transmission information sent from the first node to the second node, or the downlink transmission information comprises part of the downlink transmission information sent from the first node to the second node.

5. The method according to claim 4, wherein a transmission mode of the first information comprises an explicit indication mode and/or an implicit indication mode.

6. The method according to claim 5, wherein the first information is carried in a frame of the downlink transmission information, and the frame comprises at least one of: a first type frame, a second type frame, or a third type frame; the first type frame is a frame for transmitting the first information in the explicit indication mode; the second type frame is a frame for transmitting in the implicit indication mode; the third type frame is a frame associated with a preset condition of the second node.

7. The method according to claim 6, wherein the transmission mode of the first information is determined based on a frame type of the frame transmitting the first information.

8. The method according to claim 7, wherein:
in a case where the frame type is the first type frame, the transmission mode of the first information is the explicit indication mode;
in a case where the frame type is the second type frame, the transmission mode of the first information is the implicit indication mode; or
in a case where the frame type is the third type frame, the transmission mode of the first information is the explicit indication mode and/or the implicit indication mode.

9. The method according to claim 8, wherein the first information is carried in a downlink command of the downlink transmission information, and the downlink command comprises at least one of: a first downlink command or a second downlink command; the first downlink command comprises at least one of: a paging command, an inventory command, an access command, an acknowledgment command or an access response command; the second downlink command comprises at least one of: transport block size indication information, Cyclic Redundancy Check (CRC) information, a command format identifier, a synchronization signal index, an access mask index, a short message indication, or system information indication.

10. The method according to claim 9, wherein the transmission mode of the first information is determined based on the downlink command transmitting the first information.

11. The method according to claim 10, wherein:
in a case where the downlink command is the first downlink command, the transmission mode of the first information is the explicit indication mode;
in a case where the downlink command is the second downlink command, the transmission mode of the first information is the implicit indication mode.

12. The method according to claim 11, wherein the transmission mode of the first information is determined based on a state of the second node, and the state of the second node comprises any one of: an idle state, a connected state, an inactive state, an inventory state, a non-inventory state, a to-be-inventoried state, or a post-inventory state.

13. The method according to claim 12, wherein
in a case where the state of the second node is the idle state or the inactive state or the inventory state or the to-be-inventoried state, the transmission mode of the first information is any one of: the explicit indication mode, the transmission mode based on the first type frame, the transmission mode based on the third type frame, or the transmission mode based on the first downlink command;
in a case where the state of the second node is the connected state or the non-inventory state or the post-inventory state, the transmission mode of the first information is any one of: the implicit indication mode, the transmission mode based on the second type frame, the transmission mode based on the third type frame, or the transmission mode based on the second downlink command.

14. The method according to claim 5, wherein the explicit indication mode comprises at least one of:
transmitting the first information on a Physical Downlink Shared Channel (PDSCH);
transmitting the first information on a Physical Downlink Control Channel (PDCCH);
transmitting the first information via a Medium Access Control Control Element (MAC CE);
transmitting the first information in Radio Resource Control (RRC) signaling;
transmitting the first information on a Physical Broadcast Channel (PBCH);
transmitting the first information in a dedicated indication field of a physical downlink frame;
transmitting the first information on a dedicated physical resource; or
transmitting the first information on a dedicated physical channel.

15. The method according to claim 5, wherein the implicit indication mode comprises at least one of:
carrying the first information using a preamble or a dedicated sequence; or
carrying the first information using a Cyclic Redundancy Check (CRC).

16. The method according to claim 1, wherein the first information is transmitted in at least one of the following transmission modes: physical layer control signaling, data to be transmitted, a MAC CE, or Radio Resource Control (RRC) signaling.

17. The method according to claim 1, wherein the first information is transmitted during at least one of the following processes: a cell access process, a public message broadcast process, an inventory process, a command transmission process, or a data transmission process.

18. An information transmission method, applied to a second node, wherein the method comprises:
receiving first information sent by a first node, the first information comprising cell information.

19. The method according to claim 18, wherein the cell information comprises first cell information and/or second cell information;
wherein the first cell information comprises a cell identity, and the second cell information comprises a sub-cell identity.

20. The method according to claim 18, wherein the cell information comprises first cell information, and the first cell information is used to indicate whether the cell information comprises second cell information, the second cell information comprising a cell identity and/or a sub-cell identity.

21. The method according to claim 18, wherein the first information is carried in downlink transmission information, and the downlink transmission information comprises all downlink transmission information sent from the first node to the second node, or the downlink transmission information comprises part of the downlink transmission information sent from the first node to the second node.

22. The method according to claim 21, wherein a transmission mode of the first information comprises an explicit indication mode and/or an implicit indication mode.

23. The method according to claim 22, wherein the first information is carried in a frame of the downlink transmission information, and the frame comprises at least one of: a first type frame, a second type frame, or a third type frame; the first type frame is a frame for transmitting the first information in the explicit indication mode; the second type frame is a frame for transmitting in the implicit indication mode; the third type frame is a frame associated with a preset condition of the second node.

24. The method according to claim 23, wherein the transmission mode of the first information is determined based on a frame type of the frame transmitting the first information.

25. The method according to claim 24, wherein
in a case where the frame type is the first type frame, the transmission mode of the first information is the explicit indication mode;
in a case where the frame type is the second type frame, the transmission mode of the first information is the implicit indication mode; or
in a case where the frame type is the third type frame, the transmission mode of the first information is the explicit indication mode and/or the implicit indication mode.

26. The method according to claim 25, wherein the first information is carried in a downlink command of the downlink transmission information, and the downlink command comprises at least one of: a first downlink command or a second downlink command; the first downlink command comprises at least one of: a paging command, an inventory command, an access command, an acknowledgment command, or an access response command; the second downlink command comprises at least one of: transport block size indication information, Cyclic Redundancy Check (CRC) information, a command format identifier, a synchronization signal index, an access mask index, a short message indication, or system information indication.

27. The method according to claim 26, wherein the transmission mode of the first information is determined based on the downlink command transmitting the first information.

28. The method according to claim 27, wherein
in a case where the downlink command is the first downlink command, the transmission mode of the first information is the explicit indication mode; or
in a case where the downlink command is the second downlink command, the transmission mode of the first information is the implicit indication mode.

29. The method according to claim 28, wherein the transmission mode of the first information is determined based on a state of the second node, and the state of the second node comprises any one of: an idle state, a connected state, an inactive state, an inventory state, a non-inventory state, a to-be-inventoried state, or a post-inventory state.

30. The method according to claim 29, wherein
in a case where the state of the second node is the idle state or the inactive state or the inventory state or the to-be-inventoried state, the transmission mode of the first information is any one of: the explicit indication mode, the transmission mode based on the first type frame, the transmission mode based on the third type frame, or the transmission mode based on the first downlink command; or
in a case where the state of the second node is the connected state or the non-inventory state or the post-inventory state, the transmission mode of the first information is any one of: the implicit indication mode, the transmission mode based on the second type frame, the transmission mode based on the third type frame, or the transmission mode based on the second downlink command.

31. The method according to claim 22, wherein the explicit indication mode comprises at least one of:
transmitting the first information on a Physical Downlink Shared Channel (PDSCH);
transmitting the first information on a Physical Downlink Control Channel (PDCCH);
transmitting the first information via a Medium Access Control Control Element (MAC CE);
transmitting the first information in Radio Resource Control (RRC) signaling;
transmitting the first information on a Physical Broadcast Channel (PBCH);
transmitting the first information in a dedicated indication field of a physical downlink frame;
transmitting the first information on a dedicated physical resource; or
transmitting the first information on a dedicated physical channel.

32. The method according to claim 22, wherein the implicit indication mode comprises at least one of:
carrying the first information using a preamble or a dedicated sequence; or
carrying the first information using a CRC.

33. The method according to claim 18, wherein the first information is transmitted in at least one of the following transmission modes: physical layer control signaling, data to be transmitted, a MAC CE, or Radio Resource Control (RRC) signaling.

34. The method according to claim 18, wherein the first information is transmitted during at least one of the following processes: a cell access process, a public message broadcast process, an inventory process, a command transmission process, or a data transmission process.

35. A communication apparatus, comprising: a memory and a processor; wherein the memory is coupled to the processor; the memory is configured to store instructions executable by the processor; the processor, when executing the instructions, performs the method according to any of claims 1-17 or 18-34.

36. A computer-readable storage medium, wherein computer instructions are stored on the computer-readable storage medium, and when the computer instructions are run on a computer, the computer is caused to perform the method according to any of claims 1-17 or 18-34.
